# EUROPEAN PATENT APPLICATION

(11) **EP 4 691 721 A1**
(43) Date of publication of application: **11.02.2026**
(21) Application number: 25192427.0
(22) Date of filing: 29.07.2025
(51) Int. Cl.: B27B 5/075, B27B 5/34, B23D 45/10, B23Q 11/08, B23D 59/00, B27G 19/10

(54) **EXPANDABLE SCORING DEVICE FOR PANEL CUTTING MACHINES**

(30) Priority: 06.08.2024 IT 202400018529
(71) Applicant: SCM Group S.p.A., 47921 Rimini (RN) (IT)
(72) Inventor: BALDACCI, Marco, 47921 RIMINI (IT); PAZZINI, Ivano, 47921 RIMINI (IT)
(74) Representative: Tiburzi, Andrea

(57) **Abstract**

The present invention relates to an Expandable scoring device (1) for a panel cutting machine (M), comprising a first scoring blade (2) and a second scoring blade (3), wherein said first scoring blade (2) and said second scoring blade (3) are arranged facing each other and are adjustable relative to each other to vary a scoring width, so as to assume a closed position and one or more spaced positions. Said scoring device (1) comprises a protective element (4) interposed between said first scoring blade (2) and said second scoring blade (3) to prevent dust and/or chips from accumulating between said first (2) and second (3) scoring blades.

The present invention also relates to an engraving method and a machine for cutting panels (100).

## Description

The present invention relates to an expandable scoring device for panel cutting machines, such as panel saws or machines equipped with circular saws, for cutting wooden panels and the like.

### Field of invention

More specifically, the invention relates to a scoring device for panel cutting machines, and more specifically to an expandable scoring device with an integrated barrier for chips, dust and the like, to prevent their accumulation between the scoring blades.

In the following, the description will focus on cutting wooden panels, but it is clear that it should not be considered limited to this specific use.

### Prior art

As is well known, panel sawing machines are currently widely used in various industries for machining wood-based panels, such as particleboard, medium density fiberboard (MDF), and melamine-coated particleboard.

These machines typically use a main cutting blade to divide or section the panels into smaller pieces according to specific machining requirements. However, when cutting panels with surface coatings or laminates, such as melamine-coated panels, the cutting process can often result in chipping or splintering of the surface layer, resulting in a poor-quality finish.

To overcome this problem, scoring systems have been developed and integrated into panel cutting machines. Scoring devices, in particular, are well-known. A scoring device, which precedes the main cutting blade, creates a shallow groove on the panel surface along the intended cutting line. This pre-scoring helps prevent chipping and ensures a clean cut when following the main blade.

Conventional engraving systems often use paired blades that can be manually or automatically adjusted to match the width of the main cutting blade. This adjustability is necessary because the cutting blades can have different thicknesses, and the width of the engraving blade typically needs to be slightly wider than the main blade to effectively prevent chipping.

One problem with existing engraving systems or devices is the accumulation of debris or chips between the paired engraving blades. During operation, the main blade and the engraving device typically rotate in opposite directions, which can cause chips and/or dust to become trapped between the engraving blades. This is particularly problematic when cutting materials such as chipboard, which contain adhesives that can cause chips to stick to the blades.

Furthermore, a similar problem occurs when switching from cutting solid wood panels to coated chipboard panels. When cutting solid wood panels, the scoring blade is not used, so dust and shavings accumulate inside the scoring blades. Consequently, when cutting coated panels for the first time, these shavings accumulate between the blades, preventing adjustment.

Chip buildup can interfere with proper closure of the scoring blades, especially when a narrower cutting blade is installed and the scoring width needs to be reduced. This interference can lead to poorer scoring quality, increased machine downtime for cleaning and maintenance, and potential damage to the panels being machined.

There is therefore a need for engraving systems that can maintain constant performance while avoiding or minimizing the impact of the accumulation of chips and dust produced during processing.

### Purpose of the invention

In light of the above, it is therefore the purpose of the present invention to propose an expandable scoring device that is immune to chips that may become inserted between the blades.

Another aim of the invention is to create an effective yet economical solution.

### Object of the invention

It is, therefore, specific object of the present invention an expandable scoring device for a panel cutting machine, comprising a first scoring blade and a second scoring blade, wherein said first scoring blade and said second scoring blade are arranged facing each other and are adjustable relative to each other to vary a scoring width, so as to assume a closed position and one or more spaced positions, wherein said scoring device comprises a protective element interposed between said first scoring blade and said second scoring blade to prevent dust and/or chips from accumulating between said first and second scoring blades.

Always according to the invention, said first scoring blade may have an inner face and said second scoring blade has a respective inner face facing said inner face of said first scoring blade, said protective element may be coupled to the inner face of said second scoring blade, and said first scoring blade may have an adjustment seat on its respective inner face, configured to receive said protective element when said first scoring blade and said second scoring blade are in said closed position or in said one or more spaced positions.

Still according to the invention, said adjustment seat and said protective element have a circular or polygonal shape.

Advantageously according to the invention, said second scoring blade may have a housing seat, said protective element may be arranged in said housing seat of said second scoring blade, wherein said protective element is at least partially extracted from the adjustment seat when the first scoring blade and said second scoring blade are in one of said one or more spaced positions.

Preferably according to the invention, said adjustment seat, said housing seat, and said protective element may have a circular or polygonal shape.

Further according to the invention, said protective element may comprise a gasket, wherein preferably said gasket is vulcanized.

Always according to the invention, said protective element may comprise an O-ring.

Still according to the invention, said protective element may be made of incompressible material, such as polyzene and similar.

Further according to the invention, said protective element may be an expandable elastic material and/or compressed elastic foam and/or an expandable bellows and/or sponge material.

Advantageously according to the invention, said first scoring blade and said second scoring blade may be adjustable to provide a range of scoring width, between a closed position, wherein said first scoring blade and said second scoring blade are adjacent, and one or more spaced positions, wherein said first scoring blade and said second scoring blade are spaced.

Preferably according to the invention, scoring width range may be between 2.9 mm and 4.3 mm.

Always according to the invention, said first scoring blade may comprise respective cutting teeth, said second scoring blade may comprise respective cutting teeth, and said first scoring blade and said second scoring blade may be shaped so that, when in said closed position, the cutting teeth of the first scoring blade and the cutting teeth of said second scoring blade do not touch or interfere with each other.

It is further object of the present invention a method of scoring a panel in a panel cutting machine, wherein said method comprises: providing a scoring device comprising a first scoring blade and a second scoring blade; adjusting said first scoring blade and said second scoring blade relative to each other to vary a scoring width; characterized in that said method further comprises the following steps: providing a protective element interposed between said first and said second scoring blades; and arranging said protective element to prevent dust and chips generated during machining from accumulating between said first and second scoring blades.

Always according to the invention, said first scoring blade may have an inner face and said second scoring blade has a respective inner face, facing said inner face of said first scoring blade, said protective element is coupled to the inner face of said second scoring blade, said first scoring blade has an adjustment seat on its respective inner face, configured to receive said protective element when said first scoring blade and said second scoring blade are in said closed position or in said one or more spaced positions, and said method comprises the step of at least partially extracting said protective element from said adjustment seat when said first scoring blade and said second scoring blade are in one or more spaced positions.

It is also object of the present invention a panel cutting machine comprising: a base; a movable worktable for moving a panel to be cut; a cutting unit, comprising a cutting blade for cutting a panel when it is on said worktable and is moved by it; wherein said cutting unit comprises an expandable scoring device as described above, wherein said expandable scoring device is arranged to precede, in the panel cutting, said cutting blade.

### Brief description of the figures

The present invention will be now described, for illustrative but not limitative purposes, according to its preferred embodiments, with particular reference to the figures of the enclosed drawings, wherein:
figure 1 illustrates a perspective view of a panel cutting machine according to the present invention;
figure 2 illustrates a side view of a cutting unit for a panel cutting machine, according to an embodiment of the present invention;
figure 3 illustrates another side view of the cutting unit of figure 2, according to the present invention;
figure 4 illustrates a perspective view of a scoring device for a panel cutting machine, according to the present invention;
figure 5 illustrates an exploded perspective view of the engraving device of Figure 4;
figure 6 illustrates an exploded plan view of the engraving device of figure 4; and
figure 7 illustrates a sectional view of a detail of the scoring blade according to the present invention in a further embodiment.

### Detailed description

In the various figures, similar parts will be indicated with the same numerical references.

The present invention relates to scoring devices for panel cutting machines. More specifically, the invention provides an expandable scoring device with an integrated chip and dust barrier for use in machines that cut panels, such as those made of particleboard or similar materials, including fiberglass, MDF, and the like.

The scoring device may comprise two coupled blades that rotate together in opposite directions to a cutting blade. Specifically, the scoring device may precede a main cutting blade and score a melamine layer, such as a panel, which can help prevent chipping during the cutting process.

The scoring device is adjustable to accommodate different cutting blade thicknesses and can expand to a small thickness compared to the width of the main cutting blade.

In some embodiments, the scoring device may comprise a protective element, optionally flexible, between the two coupled blades. This flexible element may take the form of a gasket, an expandable bellows, or an elastic foam material. The protective element may be housed in, or coupled to, one of the scoring blades and may fit into an adjustment slot in the other blade when the scoring blades are in the closed position. Alternatively, the protective element may optionally be made of a compressible material, and compress when the blades are brought together or expand when the blades are separated.

The engraving device can be designed to allow for an adjustment range of the engraving blades. In some embodiments, this range can extend from approximately 2.9 mm to 4.3 mm. Furthermore, the bodies of the two blades can be shaped such that the teeth of the two engraving blades do not come into contact when the blades are in the closed position.

In various embodiments, the flexible element can serve to prevent the accumulation of chips between the scoring blades. This feature can solve problems related to chips, which can be impregnated with glue from the panel material, adhering to the blades and interfering with the blades' closure.

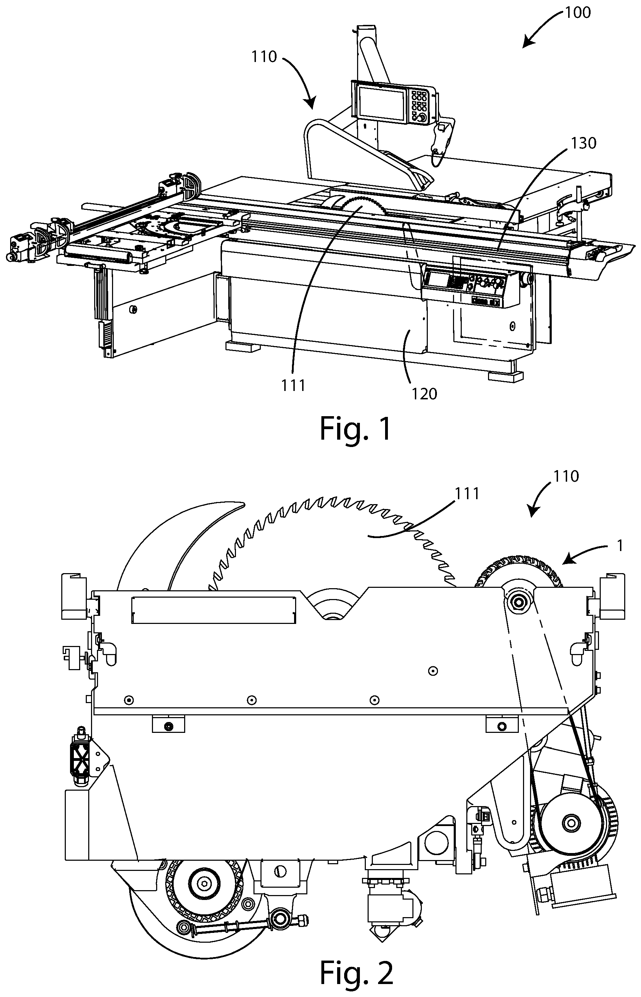

Referring now to figure 1, a panel cutting machine 100 for cutting panels or sheets of material is seen.

The panel cutting machine 100 may comprise a base 120, to stably support the machine and other components.

The machine 100 also comprises a movable worktable 130, positioned above the base 120. In some embodiments, the movable worktable 130 may be designed to support and move the panel to be cut.

The machine 100 may further comprise a cutting unit 110 on the movable worktable 130.

The cutting unit 110 comprises a cutting blade 111 for cutting the panel (not shown in the figures). The cutting unit 110 can be positioned on a vertical support structure that allows it to move vertically and horizontally above the movable worktable 130.

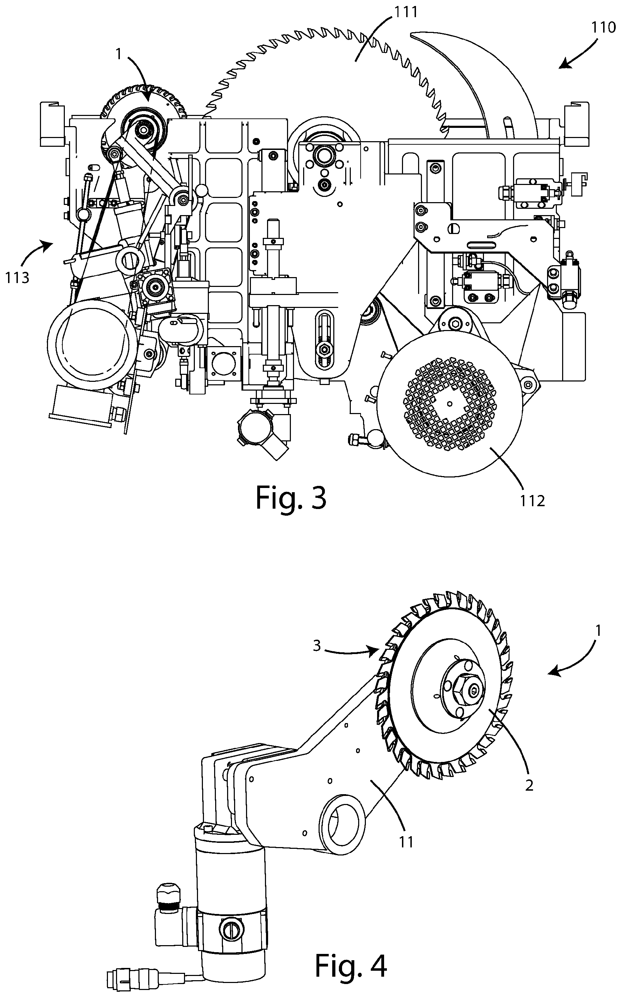

Referring to figure 2 and figure 3, the cutting unit 110 for a panel cutting machine 100 is observed. The cutting blade 111 is of the circular type with teeth along its circumference for cutting panels (not shown in the figures).

The cutting unit 110 generally comprises a motor for moving the blade 111 and a blade adjustment mechanism 113. The blade adjustment mechanism 113 may allow for adjustment of the position and angle of the cutting blade 111.

In some embodiments, the cutting blade 111 may be mounted to allow vertical and horizontal movement relative to the movable worktable 130, to make cuts at different depths and positions on the panel.

The cutting unit 110 includes a system of gears, pulleys and mechanical linkages to drive the cutting blade 111, control its movement and facilitate the adjustment capabilities of the blade adjustment mechanism 112.

Referring to figures 4, 5 and 6, an engraving device 1 for the machine 100 is shown, according to a first embodiment.

The engraving device 1 comprises a first engraving blade 2 and a second engraving blade 3 arranged facing each other, i.e. in a parallel configuration.

The engraving device 1 also comprises a support arm 11 for the first engraving blade 2 and the second engraving blade 3.

The engraving device 1 also features a compressed air intake 12 for moving the blades 2 and 3.

In particular, the first scoring blade 2 and the second scoring blade 3 are positioned or facing each other, allowing them to be adjusted with respect to each other to vary a scoring width by translating them along the T axis.

In some embodiments, the first scoring blade 2 and the second scoring blade 3 may be designed to assume a closed position and one or more spaced positions.

This adjustability can allow the engraving device 1 to accommodate different panel thicknesses or engraving requirements. The engraving width can be varied within a range, which in some embodiments can extend from approximately 2.9 mm to 4.3 mm. Naturally, the adjustment range of the blades can vary.

The engraving device 1 may comprise an arm 11 for supporting the engraving blades 2 and 3.

The first scoring blade 2 has cutting teeth 22 along its circumference, for scoring panels (not shown in the figures). Similarly, the second scoring blade 3 includes cutting teeth 32. The arrangement of these cutting teeth may be such that when the first scoring blade 2 and the second scoring blade 3 are in the closed position, i.e., pushed together, the teeth of the two blades do not come into contact with each other.

The scoring device 1 is designed to precede the cutting blade in the process of cutting a panel. This arrangement thus allows the scoring device 1 to create a score line on the surface of the panel prior to the main cutting operation by cutting blade 111, potentially reducing the risk of chipping or splintering during cutting.

The first scoring blade 2 may have an adjustment seat 21 obtained on the internal face 24, which faces the corresponding internal face 34 of the second scoring blade 3.

The second cutting blade 3 may comprise a housing seat 31, arranged in correspondence with said adjustment seat 21.

The housing seat 31 is configured to accommodate a protective element 4, flexible or compressible or made of plastic material such as polyzene and the like, which are generally non-compressible in the configurations of use under consideration, which in the present embodiment is made as a gasket 4.

When the first scoring blade 2 and the second scoring blade 3 are moved from the closed position to one or more spaced positions, the gasket 4 is pulled out of the adjustment seat 21.

The housing seat 21 may be configured to receive the gasket 4 (i.e., the flexible or compressible protective member) when the first scoring blade 2 and the second scoring blade 3 are in the closed position or in one or more spaced positions.

The adjustment seat 21 has a circular shape, or, in other embodiments it may have a different shape, for example polygonal, square, hexagonal, etc.

The housing seat 31, in turn, is circular, but in other embodiments it may have a different shape, for example polygonal, square, hexagonal, etc.

Similarly, the corresponding flexible or compressible element 4, i.e., the gasket 4, is circular or may have a different shape, for example polygonal, square, hexagonal, etc.

In some embodiments, the seal 4 may comprise an O-ring, which may provide flexibility and resilience to the sealing mechanism.

The interaction between the seal 4, the adjustment seat 21 of the first scoring blade 2, and the housing seat 31 of the second scoring blade 3 can serve multiple purposes. This arrangement can help prevent the accumulation of dust and chips between the scoring blades 2 and 3. When the blades are in the closed position or spaced within a predefined range, the seal 4 creates a barrier that prevents the entry of chips or other debris into the space between the scoring blades 2 and 3.

As the scoring blades 2 and 3 are adjusted to increase the scoring width, the gasket 4 may be gradually pulled out of the adjustment seat 21. This movement may allow the gasket 4 to still protect the inside of the scoring device 1.

Still referring to the figures, the engraving device 1 also comprises the flanges 23 and 33 for closing and locking the blades 2 and 3.

In some embodiments, the seal 4 may be vulcanized into the housing seat 31 of the first scoring blade 2. This attachment method can ensure a secure fit and can improve the durability of the seal.

In some embodiments, the first scoring blade 2 and the second scoring blade 3 may be adjustable, as mentioned, to provide a scoring width range from 2.9 mm to 4.3 mm. Within this range or adjustability, the scoring device 1 can accommodate various panel thicknesses (not shown in the figures) and scoring requirements.

Seal 4 may deform or compress slightly as the width of scoring device 1 is adjusted, maintaining contact with both first scoring blade 2 and second scoring blade 3 throughout the relative range of motion between the closed and spaced positions. This continuous contact helps ensure consistent chip avoidance across different scoring width settings.

The operation of an expandable engraving device 1 is as follows.

The method of scoring a panel using the expandable scoring device 1 in a panel cutting machine involves providing a scoring device 1, as described above, and adjusting the first scoring blade 2 and the second scoring blade 3 relative to each other. As mentioned, in the present embodiment, the scoring width can be adjusted within a range of approximately 2.9 mm to 4.3 mm.

The gasket 4 (i.e. the protective element) is arranged in the housing seat 31 of the first scoring blade 2.

The scoring method also comprises receiving the gasket 4 in the adjustment seat 21 of the first scoring blade 2, when the first scoring blade 2 and the second scoring blade 3 are in the closed position, or in one or more positions spaced within an operating range. This configuration creates, as mentioned, a barrier between the scoring blades 2 and 3, to prevent the accumulation of chips in the space between them.

When the first scoring blade 2 and the second scoring blade 3 are adjusted in one or more of said spaced positions, the scoring method involves the step of partially extracting the gasket 4 from the adjustment seat 21.

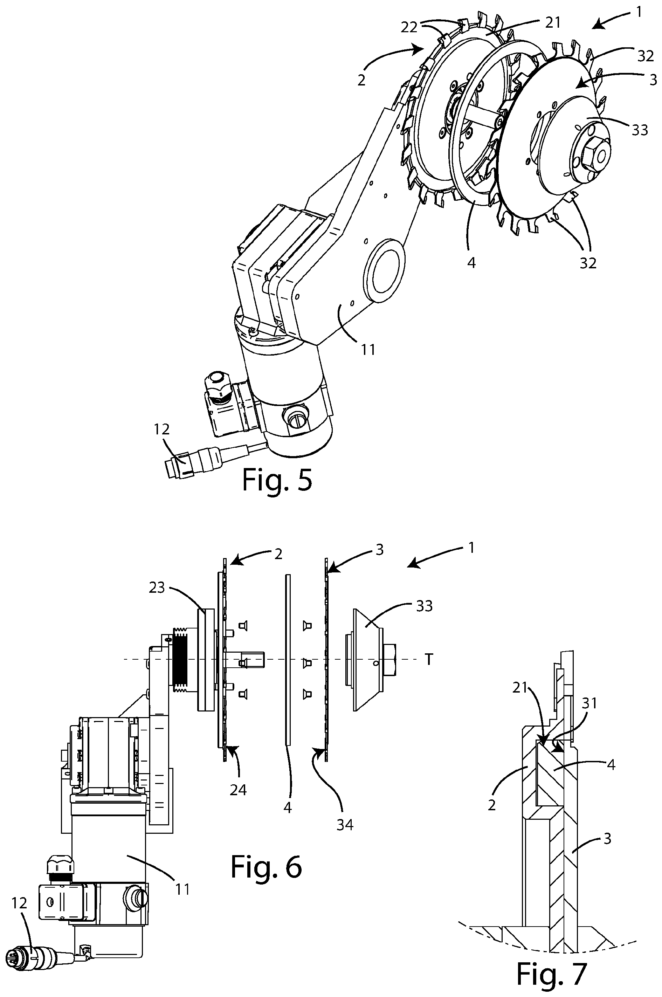

Referring to figure 7, a further embodiment is observed, in which the protection element 4 is coupled to the internal face 34 of the second scoring blade 3.

In the figure, the expandable scoring device 1 is in the closed position and the protective element 4 is arranged in the adjustment seat 21. When the first 2 and second 3 scoring blades are in one or more spaced positions, the protective element 4 is at least partially extracted from the adjustment seat 21, protecting the inside of the scoring device 1, and preventing chips and dust from penetrating between the scoring blades 2 and 3.

In other embodiments, the first 2 and second 3 scoring blades may not include any housing and the protection element 4 is arranged between the two scoring blades 2 and 3 and coupled to one of them, for example to said second scoring blade 3. The coupling may occur by means of glue, or by adhesion in general or other methods.

In a further embodiment, the protection element may be of the compressible type, so that, when said first scoring blade 2 and said second scoring blade 3 are in said closed position, the protection element 4 is completely compressed, while when it is in one of said one or more spaced positions, it expands protecting the scoring device 1 as indicated above.

The flexible or compressible protective element, in addition to being a gasket, in other embodiments may be an elastic foam material, compressed elastic foam, an expandable bellows, elastic foam, etc. The expandable bellows or elastic foam may be designed to fit into the housing seat 21 of the first scoring blade 2, similar to the gasket 4. These alternative materials may also interact with the adjustment seat 31 of the second scoring blade 3 when the blades are in the closed position or in one or more spaced positions.

The expandable scoring device 1 with integrated barrier for debris, shavings, dust and the like described above finds industrial application in panel cutting machines used in various manufacturing sectors.

This solution is particularly useful in industries that process wood-based panels, such as particleboard, medium density fiberboard (MDF), and melamine-coated particleboard.

The expandable scoring device 1 can be integrated into panel cutting machines used in furniture manufacturing.

### Advantages

The expandable scoring device with integrated chip barrier of the present invention offers several advantages over conventional scoring systems.

First, the inclusion of a gasket in the first scoring blade housing, which mates with an adjustment seat in the second scoring blade, provides a barrier against debris buildup between the blades, reducing the risk of chips and dust interfering with proper closure of the scoring blades.

A technical advantage of this system is its ability to prevent machine downtime typically associated with cleaning and maintenance due to the accumulation of debris, chips, and dust.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Expandable scoring device (1) for a panel cutting machine (M), comprising
a first scoring blade (2) and
a second scoring blade (3),
wherein said first scoring blade (2) and said second scoring blade (3) are arranged facing each other and are adjustable relative to each other to vary a scoring width, so as to assume a closed position and one or more spaced positions,
**characterized**
**in that** in that said scoring device (1) comprises a protective element (4) interposed between said first scoring blade (2) and said second scoring blade (3) to prevent dust and/or chips from accumulating between said first (2) and second (3) scoring blades.

2. Scoring device (1) according to claim 1, **characterized**
**in that** said first scoring blade (2) has an inner face (24) and said second scoring blade (3) has a respective inner face (34) facing said inner face (24) of said first scoring blade (2),
**in that** said protective element (4) is coupled to the inner face (34) of said second scoring blade (3), and
**in that** said first scoring blade (2) has an adjustment seat (21) on its respective inner face (24), configured to receive said protective element (4) when said first scoring blade (2) and said second scoring blade (3) are in said closed position or in said one or more spaced positions.

3. Scoring device (1) according to the preceding claim, **characterized in that** said adjustment seat (21) and said protective element (4) have a circular or polygonal shape.

4. Scoring device (1) according to any one of the preceding claims, **characterized**
**in that** said second scoring blade (3) has a housing seat (31),
**in that** said protective element (4) is arranged in said housing seat (31) of said second scoring blade (3),
wherein said protective element (4) is at least partially extracted from the adjustment seat (21) when the first scoring blade (2) and said second scoring blade (3) are in one of said one or more spaced positions.

5. Scoring device (1) according to the preceding claim, **characterized in that** said adjustment seat (21), said housing seat (31), and said protective element (4) have a circular or polygonal shape.

6. Scoring device (1) according to any one of the preceding claims, **characterized in that** said protective element comprises a gasket (4), wherein preferably said gasket (4) is vulcanized.

7. Scoring device (1) according to any one of the preceding claims, **characterized in that** said protective element (4) comprises an O-ring.

8. Scoring device (1) according to any one of the preceding claims, **characterized in that** said protective element (4) is made of incompressible material, such as polyzene and similar.

9. Scoring device (1) according to any one of the claims 1-7, **characterized in that** said protective element is an expandable elastic material and/or compressed elastic foam and/or an expandable bellows and/or sponge material.

10. Scoring device (1) according to any one of the preceding claims, **characterized in that** said first scoring blade (2) and said second scoring blade (3) are adjustable to provide a range of scoring width, between a closed position, wherein said first scoring blade (2) and said second scoring blade (3) are adjacent, and one or more spaced positions, wherein said first scoring blade (2) and said second scoring blade (3) are spaced.

11. Scoring device (1) according to the preceding claim, **characterized in that** said scoring width range is between 2.9 mm and 4.3 mm.

12. Scoring device (1) according to any one of the preceding claims, **characterized in that** said first scoring blade (2) comprises respective cutting teeth (22),
**in that** said second scoring blade (3) comprises respective cutting teeth (32), and
**in that** said first scoring blade (2) and said second scoring blade (3) are shaped so that, when in said closed position, the cutting teeth (22) of the first scoring blade (21) and the cutting teeth (32) of said second scoring blade (3) do not touch or interfere with each other.

13. Method of scoring a panel in a panel cutting machine (100), wherein said method comprises:
providing a scoring device (1) comprising a first scoring blade (2) and a second scoring blade (3);
adjusting said first scoring blade (2) and said second scoring blade (3) relative to each other to vary a scoring width;
**characterized in that** said method further comprises the following steps:
providing a protective element (4) interposed between said first (2) and said second (3) scoring blades; and
arranging said protective element (4) to prevent dust and chips generated during machining from accumulating between said first (2) and second (3) scoring blades.

14. Method according to the preceding claim, **characterized in that** said first scoring blade (2) has an inner face (24) and said second scoring blade (3) has a respective inner face (34), facing said inner face (24) of said first scoring blade (2),
**in that** said protective element (4) is coupled to the inner face (34) of said second scoring blade (3),
**in that** said first scoring blade (2) has an adjustment seat (21) on its respective inner face (24), configured to receive said protective element (4) when said first scoring blade (2) and said second scoring blade (3) are in said closed position or in said one or more spaced positions, and
**in that** said method comprises the step of at least partially extracting said protective element (4) from said adjustment seat (21) when said first scoring blade (2) and said second scoring blade (3) are in one or more spaced positions.

15. Panel cutting machine (100) comprising:
a base (120);
a movable worktable (130) for moving a panel to be cut;
a cutting unit (110), comprising a cutting blade (111) for cutting a panel when it is on said worktable (130) and is moved by it;
wherein said cutting unit (110) comprises an expandable scoring device (1) according to any of the claims 1-12, wherein said expandable scoring device (1) is arranged to precede, in the panel cutting, said cutting blade (111).
